# EUROPÄISCHE PATENTSCHRIFT

(11) **EP 0 226 744 B1**
(45) Veröffentlichungstag und Bekanntmachung des Hinweises auf die Patenterteilung: **21.07.1993**
(21) Anmeldenummer: 86114450.9
(22) Anmeldetag: 18.10.1986
(51) Int. Cl.: F16M 1/025, F16C 9/02, F02F 7/00

(54) **Verfahren zum Ausrichten von Lagerdeckeln an Lagerabschnitten eines Kurbelgehäuses**
Method of adjusting bearing caps to the bearing units of a crankshaft casing
Procédé d'ajustement de couvercles de paliers aux corps de paliers d'un carter de vilebrequin

(30) Priorität: 21.12.1985 DE 3545722
(43) Veröffentlichungstag der Anmeldung: 01.07.1987
(73) Patentinhaber: Dr.Ing.h.c. F. Porsche Aktiengesellschaft, 70435 Stuttgart (DE)
(72) Erfinder: Ampferer, Herbert, Dipl.-Ing. FH, D-7123 Sachsenheim 2 (DE)

(56) Entgegenhaltungen:
- DE-A- 2 140 047
- DE-B- 1 273 269
- US-A- 864 049
- US-A- 3 751 080
- US-A- 3 921 364
- DUBBEL, Taschenbuch für den Maschinenbau, 13. Auflage, 1974, Band II., S. 175, 184
- Niemann, G., Maschinenelemente, Zweite Auflage, 1981, Band I., S. 32

## Beschreibung

Die Erfindung betrifft ein Verfahren zum Ausrichten von Lagerdeckeln an Lagerabschnitten eines Kurbelgehäuses und Bearbeiten von durch die Lagerdeckel und Lagerabschnitte gebildeten Kurbelwellenlagern, wobei die Lagerdeckel über beiderseits der Kurbelwelle angebrachte Paßstifte und Befestigungsschrauben mit den Lagerabschnitten zusammenwirken.

Bei einem bekannten Kurbelwellenlager (DE-B- 1 273 269) werden die Bohrungen für die Paßstifte in den Lagerdeckeln und den Lagerabschnitten des Kurbelgehäuses in getrennten Fertigungszyklen eingearbeitet. Hierbei ist nachteilig, daß sowohl bezüglich des Durchmessers dieser Bohrungen und der Paßstifte als auch des axialen Abstandes dieser Paßstifte sich ungünstige Toleranzlagen ergeben können, die nicht nur die Montage der Lagerdeckel bei zu engem Toleranzfeld sondern auch die Funktion der Querkraftabstützung besagter Paßstifte bei zu großem Toleranzfeld beeinträchtigen können.

Aufgabe der Erfindung ist es, ein Verfahren zum Ausrichten von Lagerdeckeln an Lagerabschnitten eines Kurbelgehäuses und Bearbeiten von durch die Lagerdeckel und Lagerabschnitte gebildeten Kurbelwellenlagern zu schaffen, durch das ein enges Toleranzfeld der Paßstiftbohrungen untereinander und auch relativ zu Bohrungen der Kurbelwellenlager realisierbar ist.

Erfindungsgemäß wird diese Aufgabe durch die kennzeichnenden Verfahrensschritte des Anspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß die Einhaltung enger, die Lagerung der Kurbelwelle günstig beeinflussender Toleranzen (Geräuschreduktion) zwischen den einzelnen Paßstiftbohrungen und auch den Bohrungen der Kurbelwelle auf einfache Art und Weise möglich ist. Darüber hinaus ist eine gute Querkraftabstützung der Lagerdeckel an den Lagerabschritten über die Paßstifte sichergestellt, was gerade für Brennkraftmaschinen mit V-förmig angeordneten Zylinderreihen von Bedeutung ist. Die Lagerdeckel können Bestandteil eines Gehäuses sein, dessen äußere Wandungen zur Geräuschreduktion eine Fortsetzung der Kurbelgehäuseaußenwandungen bilden und Kurbelzapfen der Kurbelwelle in Richtung Ölwanne überragen. Außerdem gewährleisten die Paßstifte, die einen Kegel- und einen Gewindebolzen umfassen, eine rationelle und lagerichtige Montage der Lagerdeckel an den Lagerabschnitten des Kurbelgehäuses.

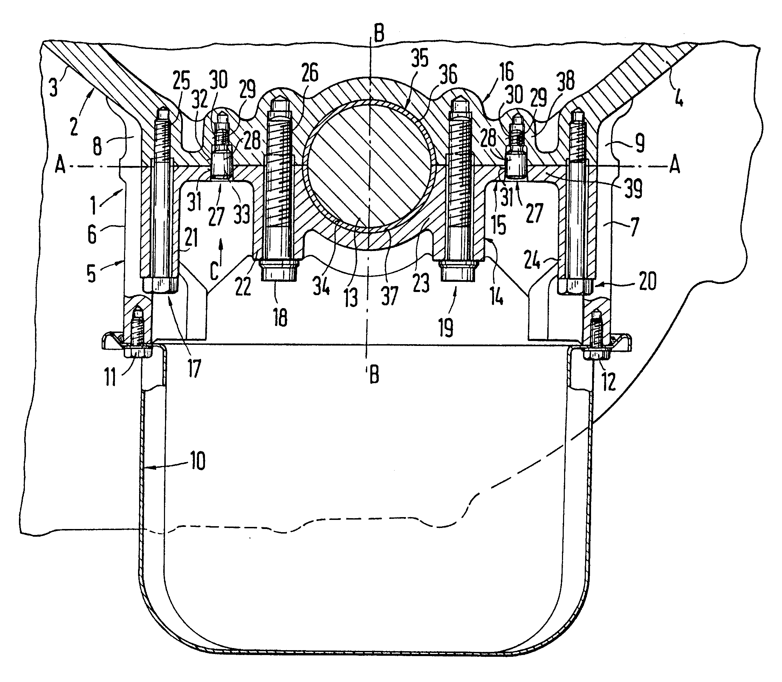

Das Wesen der Erfindung wird mit der Zeichnung verdeutlicht, in der ein Teilquerschnitt einer Brennkraftmaschine mit V-förmig angeordneten Zylindern im Bereich einer Kurbelwelle dargestellt ist.

Von der Brennkraftmaschine 1 ist ein Kurbelgehäuse 2 gezeigt, das zwei V-förmig zueinander angeordnete Zylinderreihen 3, 4 aufweist. In einer horizontalen Trennebene A-A ist das Kurbelgehäuse 2 an ein unteres Gehäuse 5 angeschlossen, dessen seitliche Begrenzungswandungen 6, 7 als Fortsätze der Wandungen 8, 9 des Kurbelgehäuses 2 ausgebildet sind. Die Begrenzungswandungen 6, 7 erstrecken sich bis zu einer Ölwanne 10, die mit Schrauben 11, 12 am Gehäuse 5 gehalten ist. Eine Kurbelwelle 13 ist auf einer senkrechten, die Trennebene A-A schneidenden Mittellängsebene B-B der Brennkraftmaschine 1 angeordnet und von Kurbelwellenlagern 14 aufgenommen. Jedes Kurbelwellenlager 14 wird gebildet durch einen Lagerdeckel 15 und einen Lagerabschnitt 16 des Kurbelgehäuses 2, wobei der Lagerdeckel 15 einstückig mit dem Gehäuse 5 verbunden ist - vergleichbare Ausführungen sind in der EP-PS 00 38 560 und DE-PS 22 57 651 beschrieben -. Zur Halterung des Lagerdeckels 15 dienen Befestigungsschrauben 17, 18 und 19, 20, die beiderseits der Kurbelwelle 13 oder der Mittellängsebene B-B verlaufen, und zwar senkrecht zur Trennebene A-A.

Die Befestigungsschrauben 17, 18 und 19, 20 durchdringen büchsenartige Aufnahmen 21, 22 und 23, 24 des Lagerdeckels 15 und wirken mit Gewinden 25, 26 im Lagerabschnitt 16 zusammen. Zwischen den Befestigungsschrauben 17, 18 - ebenso wie zwischen den Befestigungsschrauben 19, 20 - ist ein Paßstift 27 vorgesehen, der einen Kegel 28 und einen Gewindebolzen 29 umfaßt. Der Gewindebolzen 29 ist in eine Gewindebohrung 30 des Lagerabschnitts 16 eingedreht, wogegen der Kegel 28 form- und kraftschlüssig mit Kegelbohrungen 31, 32 des Lagerdeckels 15 bzw. des Lagerabschnitts 16 zusammenarbeitet. Zum Eindrehen des Paßstiftes 27 bzw. des Gewindebolzens 29 in die Gewindebohrung 30 ist besagter Paßstift 27 bei 33 mit einer Aufnahme (Innensechskant) für ein Werkzeug versehen, was nicht gezeigt ist.

Zwischen einem Lagerzapfen 34 der Kurbelwelle 13 und einer Lagerbohrung 35 des Kurbelwellenlagers 14 sind Lagerschalen 36, 37 vorgesehen.

Die Verfahrensschritte für das Ausrichten des Lagerdeckels 15 am Lagerabschnitt 16 und das Bearbeiten der Lagerbohrung 35 des Kurbelwellenlagers 14 sind wie folgt:
a) Festmachen des Lagerdeckels 15 ohne Kurbelwelle 13 mit den Befestigungsschrauben 18 und 19, gegebenenfalls auch 17 und 20,
b) Einarbeitung der Bohrungen 30, 31 und 32 für den Paßstift 27 in den Lagerdeckel 15 und die Lagerabschnitte 16;
c) Montage des Paßstiftes 27;
d) Bearbeitung der durch den Lagerdeckel 15 und den Lagerabschnitt 16 gebildeten Lagerbohrung 35 für die Kurbelwelle 13;
e) Demontage der Lagerdeckel 16, d.h. Lösen der Befestigungsschrauben 17, 18 und 19, 20 sowie der paßstifte 27;
f) Montage der Kurbelwelle 13 und der Lagerdeckel 15 dergestalt, daß der Lagerdeckel 15 zusammen mit dem Gehäuse 5 zuerst über die Paßstifte 27 ausgerichtet und erst dann mit den Befestigungsschrauben 17, 18 und 19, 20 festgemacht wird.

Die Gewindebohrung 30 und die Kegelbohrung 32 werden durch eine Einbohrung in eine örtliche Verdickung 38 des Lagerabschnitts 16 gebildet. Dagegen ist die Kegelbohrung 31 eine Durchgangsbohrung in einer Querwand 39 des Lagerdeckels 15. Die Bohrungen 30, 31 und 32 werden von dem Lagerdeckel 15 - Richtung C - aus eingearbeitet.

## Patentansprüche

1. Verfahren zum Ausrichten von Lagerdeckeln (15) an Lagerabschnitten (16) eines Kurbelgehäuses (2) und Bearbeiten von durch die Lagerdeckel (15) und Lagerabschnitte (16) gebildeten Kurbelwellenlagern (14), wobei die Lagerdeckel (15) über beiderseits der Kurbelwelle (13) angebrachte Paßstifte (27) und Befestigungsschrauben (17,18,19,20) mit den Lagerabschnitten (16) zusammenwirken, gekennzeichnet durch folgende Verfahrensschritte:
- Festmachen der Lagerdeckel (15) ohne Kurbelwelle (13) an den Lagerabschnitten (16) mittels der Befestigungsschrauben (17, 18 und 19, 20);
- Einarbeitung der Bohrungen (Gewindebohrung 30; Kegelbohrungen 31 und 32) für die Paßstifte (27) in den Lagerdeckeln (15) und den Lagerabschnitten (16);
- Montage der Paßstifte (27);
- Bearbeitung der durch die Lagerdeckel (16) und Lageraschnitte (16) gebildeten Lagerbohrungen (35) für die Kurbelwelle (13);
- Demontage der Lagerdeckel (15);
- Montage der Kurbelwelle (13) und der Lagerdeckel (15) dergestalt, daß die Lagerdeckel (15) zuerst über die Paßstifte (27) ausgerichtet und dann mittels der Befestigungsschrauben (17, 18 und 19, 20) festgemacht werden.

2. Verfahren nach Anspruch 1, dadurch gekennzeichnet, daß die Bohrungen (Gewindebohrung 30; Kegelbohrungen 31 und 32) für die Paßstifte (27) von den Lagerdeckeln (15) aus eingearbeitet werden.

## Claims

1. A method of adjusting bearing covers (15) on bearing portions (16) of a crankcase (2), and of machining crankshaft bearings (14) formed by the bearing covers (15) and bearing portions (16), wherein the bearing covers (15) cooperate with the bearing portions (16) by way of adjustment pins (27) and fastening bolts (17, 18, 19, 20) mounted on both sides of the crankshaft (13), **characterized by** the following method steps:
- securing the bearing covers (15) without the crankshaft (13) on the bearing portions (16) by means of the fastening bolts (17, 18 and 19, 20);
- cutting the bores (threaded bore 30; tapered bores 31 and 32) for the adjustment pins (27) in the bearing covers (15) and the bearing portions (16);
- assembling the adjustment pins (27);
- machining the bearing bores (35) - formed by the bearing covers (16) [*sic* - *recte* (15)] and bearing portions (16) - for the crankshaft (13);
- dismantling the bearing covers (15), and
- assembling the crankshaft (13) and the bearing covers (15) in such a way that the bearing covers (15) are first adjusted by way of the adjustment pins (27) and are then secured by way of the fastening bolts (17, 18 and 19, 20).

2. A method according to Claim 1, **characterized in that** the bores (threaded bore 30; tapered bores 31 and 32) for the adjustment pins (27) are cut from the bearing covers (15).

## Revendications

1. Procédé pour l'alignement de couvercles de palier (15) sur des parties de palier (16) d'un carter de vilebrequin (2) et usinage des paliers de vilebrequin (14) formés par les couvercles (15) et les parties (16), les couvercles (15) coopérant avec les parties (16), par des goujons d'assemblage (27) et des vis de fixation (17, 18, 19, 20), placés des deux côté du vilebrequin (13), caractérisé par les étapes suivantes :
- fixation des couvercles (15) sans vilebrequin (13) sur les parties de palier (16) au moyen des vis de fixation (17, 18 et 19, 20) ;
- usinage des alésages (trou taraudé 30 ; alésages coniques 31 et 32) pour les goujons d'assemblage (27) dans les couvercles (15) et les parties de palier (16) ;
- montage des goujons d'assemblage (27) ;
- usinage des alésages de palier (35), formés à travers les couvercles (15) et les parties de palier (16), pour le vilebrequin (13) ;
- démontage des couvercles (15) ;
- montage du vilebrequin (13) et des couvercles (15) de manière que les couvercles (15) soient d'abord orientés par les goujons d'assemblage (27) puis fixés au moyen des vis de fixation (17, 18 et 19, 20).

2. Procédé selon la revendication 1, caractérisé en ce que les alésages (trou taraudé 30 ; alésages coniques 31 et 32) pour les goujons d'assemblage (27) sont pratiqués à partir des couvercles (15).
